# EUROPEAN PATENT APPLICATION

(11) **EP 4 561 156 A1**
(43) Date of publication of application: **28.05.2025**
(21) Application number: 23842259.6
(22) Date of filing: 17.07.2023
(51) Int. Cl.: H04W 24/08

(54) **METHOD FOR MEASURING AND REPORTING CROSS-LINK INTERFERENCE, DEVICE AND READABLE STORAGE MEDIUM**

(30) Priority: 21.07.2022 CN 202210869421
(71) Applicant: Vivo Mobile Communication Co., Ltd., Dongguan, Guangdong 523863 (CN)
(72) Inventor: LI, Na, Dongguan, Guangdong 523863 (CN)
(74) Representative: Lavoix
(86) International application number: PCT/CN2023/107713
(87) International publication number: WO 2024/017196

(57) **Abstract**

This application pertains to the field of communication technologies, and discloses a method for measuring and reporting cross-link interference, a device, and a readable storage medium. The method includes: receiving, by a terminal, first configuration information from a network device, where the first configuration information includes first information and/or second information; performing, by the terminal, cross-link interference CLI measurement on a CLI measurement resource based on the first configuration information; and sending, by the terminal to the network device, a CLI report corresponding to the CLI measurement resource, where the first information is used to configure or indicate spatial relation information corresponding to each CLI measurement resource, and the second information is used to configure or indicate a configuration parameter for CLI measurement.

## Description

### CROSS-REFERENCE TO RELATED APPLICATIONS

This application claims priority to Chinese Patent Application No. 202210869421.2, filed in China on July 21, 2022, which is incorporated herein by reference in its entirety.

### TECHNICAL FIELD

This application pertains to the field of communication technologies, and specifically relates to a method for measuring and reporting cross-link interference, a device, and a readable storage medium.

### BACKGROUND

In flexible duplex mode, cross-link interference (Cross-Link Interference, CLI) needs to be measured and reported. For transmission at a high frequency (new frequency range 2 (Frequency range 2, FR2)), a directional beam (beam) is usually used. However, receive beam direction information cannot be configured for a cross-link interference-reference signal (Cross-Link Interference-Reference Signal, CLI-RS) for related CLI measurement. Consequently, accuracy of the CLI measurement is insufficient.

### SUMMARY

Embodiments of this application provide a method for measuring and reporting cross-link interference, a device, and a readable storage medium to resolve a problem that accuracy of related CLI measurement is insufficient.

According to a first aspect, a method for measuring and reporting cross-link interference is provided and includes:
receiving, by a terminal, first configuration information from a network device, where the first configuration information includes first information and/or second information;
performing, by the terminal, cross-link interference CLI measurement on a CLI measurement resource based on the first configuration information; and
sending, by the terminal to the network device, a CLI report corresponding to the CLI measurement resource, where
the first information is used to configure or indicate spatial relation information corresponding to each CLI measurement resource, and the second information is used to configure or indicate a configuration parameter for CLI measurement.

According to a second aspect, a method for measuring and reporting cross-link interference is provided and includes:
sending, by a network device, first configuration information to a terminal, where the first configuration information includes first information and/or second information; and
receiving, by the network device, a CLI report on each of one or more CLI measurement resources, sent by the terminal, where
the first information is used to configure or indicate spatial relation information corresponding to each CLI measurement resource, and the second information is used to configure or indicate a configuration parameter for CLI measurement.

According to a third aspect, an apparatus for measuring and reporting cross-link interference is provided and includes:
a first receiving module, configured to receive first configuration information from a network device, where the first configuration information includes first information and/or second information;
a measurement module, configured to perform CLI measurement on a CLI measurement resource based on the first configuration information; and
a first sending module, configured to send, to the network device, a CLI report corresponding to the CLI measurement resource, where
the first information is used to configure or indicate spatial relation information corresponding to each CLI measurement resource, and the second information is used to configure or indicate a configuration parameter for CLI measurement.

According to a fourth aspect, an apparatus for measuring and reporting cross-link interference is provided and includes:
a third sending module, configured to send first configuration information to a terminal, where the first configuration information includes first information and/or second information; and
a fourth receiving module, configured to receive a CLI report on each of one or more CLI measurement resources, sent by the terminal, where
the first information is used to configure or indicate spatial relation information corresponding to each CLI measurement resource, and the second information is used to configure or indicate a configuration parameter for CLI measurement.

According to a fifth aspect, a terminal is provided. The terminal includes a processor and a memory. The memory stores a program or instructions capable of running on the processor. When the program or instructions are executed by the processor, the steps of the method according to the first aspect are implemented.

According to a sixth aspect, a terminal is provided and includes a processor and a communication interface, where
the communication interface is configured to receive first configuration information from a network device, where the first configuration information includes first information and/or second information;
the processor is configured to perform CLI measurement on a CLI measurement resource based on the first configuration information; and
the communication interface is configured to send, to the network device, a CLI report corresponding to the CLI measurement resource, where
the first information is used to configure or indicate spatial relation information corresponding to each CLI measurement resource, and the second information is used to configure or indicate a configuration parameter for CLI measurement.

According to a seventh aspect, a network device is provided. The network device includes a processor and a memory. The memory stores a program or instructions capable of running on the processor. When the program or instructions are executed by the processor, the steps of the method according to the second aspect are implemented.

According to an eighth aspect, a network device is provided and includes a processor and a communication interface, where
the communication interface is configured to send first configuration information to a terminal, where the first configuration information includes first information and/or second information; and
the communication interface is configured to receive a CLI report on each of one or more CLI measurement resources, sent by the terminal, where
the first information is used to configure or indicate spatial relation information corresponding to each CLI measurement resource, and the second information is used to configure or indicate a configuration parameter for CLI measurement.

According to a ninth aspect, a system for measuring and reporting cross-link interference is provided and includes a terminal and a network device. The terminal may be configured to perform the steps of the method for measuring and reporting cross-link interference according to the first aspect. The network device may be configured to perform the steps of the method for measuring and reporting cross-link interference according to the second aspect.

According to a tenth aspect, a readable storage medium is provided. The readable storage medium stores a program or instructions. When the program or instructions are executed by a processor, the steps of the method for measuring and reporting cross-link interference according to the first aspect are implemented, or the steps of the method for measuring and reporting cross-link interference according to the second aspect are implemented.

According to an eleventh aspect, a chip is provided. The chip includes a processor and a communication interface. The communication interface is coupled to the processor. The processor is configured to run a program or instructions to implement the steps of the method for measuring and reporting cross-link interference according to the first aspect, or implement the steps of the method for measuring and reporting cross-link interference according to the second aspect.

According to a twelfth aspect, a computer program or program product is provided. The computer program or program product is stored in a storage medium. The computer program or program product is executed by at least one processor to implement the steps of the method for measuring and reporting cross-link interference according to the first aspect or implement the steps of the method for measuring and reporting cross-link interference according to the second aspect.

In the embodiments of this application, the network device configures, for the terminal, the spatial relation information corresponding to each CLI measurement resource and/or the configuration parameter for CLI measurement. Therefore, on one hand, CLI measurement and reporting are implemented on a per-beam (per beam) basis, which helps improve accuracy of CLI measurement in high-frequency communication. On the other hand, flexibility and latency of CLI measurement and reporting are better.

### BRIEF DESCRIPTION OF DRAWINGS

FIG. 1 is a block diagram of a wireless communication system according to an embodiment of this application;
FIG. 2 is a schematic diagram of an existing flexible duplex mode;
FIG. 3 is a first schematic flowchart of a method for measuring and reporting cross-link interference according to an embodiment of this application;
FIG. 4 is a second schematic flowchart of a method for measuring and reporting cross-link interference according to an embodiment of this application;
FIG. 5 is a first schematic diagram of a structure of an apparatus for measuring and reporting cross-link interference according to an embodiment of this application;
FIG. 6 is a second schematic diagram of a structure of an apparatus for measuring and reporting cross-link interference according to an embodiment of this application;
FIG. 7 is a schematic diagram of a structure of a communication device according to an embodiment of this application;
FIG. 8 is a schematic diagram of a structure of a terminal according to an embodiment of this application; and
FIG. 9 is a schematic diagram of a structure of a network device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specified order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6^{th} Generation, 6G) communication system.

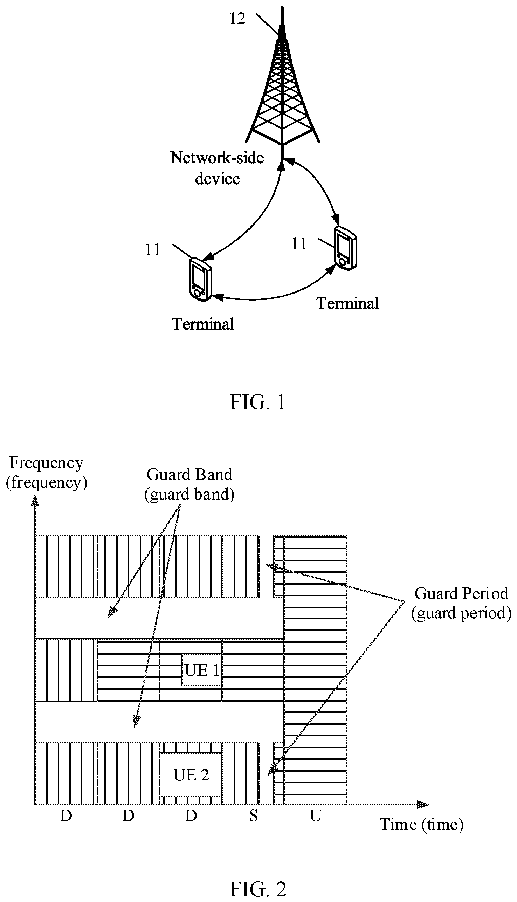

FIG. 1 is a block diagram of a wireless communication system to which an embodiment of this application may be applied. The wireless communication system includes a terminal 11 and a network device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device or a core network device. The access network device may also be referred to as a radio access network device, a radio access network (Radio Access Network, RAN), a radio access network function, or a radio access network element. The access network device may include a base station, a wireless local area network (Wireless Local Area Network, WLAN) access point, a Wi-Fi node, or the like. The base station may be referred to as a NodeB, an evolved NodeB (eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmission Reception Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

For better understanding the technical solutions of this application, the following content is first described.

### Flexible duplex (Flexible duplex)

During deployment of a conventional cellular network, a frequency division duplex (Frequency Division Duplex, FDD) or time division duplex (Time Division Duplex, TDD) mode may be used based on an available spectrum, service features, and the like. When FDD is used, uplink transmission and downlink transmission are located at different frequencies, do not interfere with each other, and can be performed simultaneously. When TDD is used, uplink transmission and downlink transmission are located at a same frequency and staggered in time division mode. The two duplex modes have their advantages and disadvantages.

To use limited spectrum resources more flexibly to dynamically match service requirements and improve resource utilization efficiency and performance such as uplink coverage and latency of data transmission, a flexible duplex mode is proposed. The flexible duplex mode is non-overlapping subband full duplex (non-overlapping subband full duplex, SBFD). It is full duplex on a network side. To be specific, at a same time, uplink transmission and downlink transmission can be performed simultaneously at different frequency domain locations, and a guard band (Guard Band) can be reserved between frequency domain locations (corresponding to duplex subbands) corresponding to different transmission directions to avoid interference between uplink and downlink. It is half duplex on a terminal side, that is, consistent with TDD, where only uplink transmission or downlink transmission can be performed at a same time, and the two cannot be performed simultaneously. Understandably, in this mode of full duplex on the network side and half duplex on the terminal side, uplink transmission and downlink transmission performed at the same time on the network side can be intended only for different terminals.

FIG. 2 is a schematic diagram of the flexible duplex mode, where a vertically striped part represents downlink resources and a horizontally striped part represents uplink resources. On the network side, within some downlink symbols, a single carrier or bandwidth part (Bandwidth Part, BWP) is semi-statically divided into three duplex subbands in frequency domain, where both sides of the carrier are downlink duplex subbands and the center is an uplink duplex subband, to reduce interference to adjacent carriers. A third slot is used as an example. In the third slot, user equipment (User Equipment, UE) 1 and UE 2 respectively perform uplink transmission and downlink reception.

### TDD mode (TDD mode)

When an NR cell is deployed on an asymmetric spectrum, the TDD duplex mode is generally used. In this case, a time division duplex uplink-downlink common configuration (TDD-UL-DL-ConfigCommon) may be configured in common parameters of the cell to indicate TDD frame structure information, including a TDD frame period, the number of complete downlink/uplink slots (Slot) included in a single frame period, the number of downlink/uplink symbols (Symbol) included in addition to the complete downlink/uplink slots, and the like. Optionally, a time division duplex uplink-downlink dedicated configuration (TDD-UL-DL-ConfigDedicated) may also be independently configured for each UE by using radio resource control (Radio Resource Control, RRC) signaling, and used to further modify uplink and downlink symbol configurations of one or more slots in a single frame period on a basis of TDD-UL-DL-ConfigCommon (that is, initial values of uplink and downlink symbol configurations of the slot are specified by TDD-UL-DL-ConfigCommon and then further modified by TDD-UL-DL-ConfigDedicated, and this modification is applied to only UE receiving the RRC signaling), but the modification herein is limited to further indicating a flexible (Flexible) symbol in the slot (that is, a transmission direction is not clear, and whether the symbol is used for downlink transmission or uplink transmission may be determined later based on a requirement) as a downlink (Downlink, DL)/uplink (Uplink, UL) symbol, and it is not permitted to change DL/UL symbols in the slot to other directions.

The foregoing TDD-UL-DL-ConfigCommon and/or TDD-UL-DL-ConfigDedicated is an optional configuration. Because the configuration information can only be semi-statically configured/modified based on information of an RRC layer, each symbol (in combination with a transmission direction configured for the symbol) in a single TDD frame period determined by the configuration information is referred to as a semi-static (Semi-static) DL/UL/flexible symbol in the following description. The symbol may be further abstracted as a time domain unit, and the time domain unit may correspond to a slot (Slot), a symbol (Symbol), or the like. In this case, a single TDD frame period may include a plurality of semi-static DL/UL/flexible time domain units based on the foregoing configuration information.

When the foregoing TDD-UL-DL-ConfigCommon and TDD-UL-DL-ConfigDedicated are not configured, there is no clear concept of a TDD frame period. In this case, each slot/symbol in each radio frame of the NR cell may be understood as a semi-static flexible slot/symbol or abstracted as a semi-static flexible time domain unit.

In addition, a base station may also indicate a slot format (slot format related indicator, SFI) by using dynamic signaling group common downlink control information (group common Downlink Control information, group common DCI) (such as DCI 2-0), where the dynamic SFI may only indicate that a semi-static flexible symbol is a DL/UL/flexible symbol, but cannot change a transmission direction of the semi-static DL/UL symbol.

In a dynamic TDD system, different TDD configurations may be configured for neighboring cells, or different UEs in a cell have different TDD configurations or indications. Therefore, there is interference from a radio base station (next Generation NodeB, gNB) to a gNB (while gNB 1 performs downlink transmission, gNB 2 performs uplink reception, and gNB 2 receives interference from gNB 1) between neighboring cells or interference from UE to UE (while UE 1 performs uplink transmission, UE 2 performs downlink reception, and UE 2 receives interference from UE 1).

### CLI measurement and reporting

Once different TDD uplink-downlink configurations are applied between neighboring cells or flexible duplex is used in neighboring cells or in a same cell, uplink transmission from UE in a cell interferes with downlink reception of other UEs in the cell or the neighboring cells (the uplink interferes with the downlink). This interference is referred to as inter-cell UE-to-UE cross-link interference (CLI). Specifically, CLI in a dynamic TDD system is full-band, that is, full-band CLI (full-band CLI), while CLI in a flexible duplex system is intra-subband or inter-subband CLI (intra-/inter-subband CLI). To reduce the inter-cell UE-to-UE CLI, the gNB may exchange and coordinate expected TDD UL/DL configurations through Xn and F1 interfaces. Considering the exchanged information, the gNB may determine sending and receiving modes to avoid CLI to or from neighboring cells.

NR Rel-16 supports two types of CLI measurement and reporting in layer 3 (L3) (that is, CLI-received signal strength indicator (CLI-Received Signal Strength Indicator, CLI-RSSI) measurement and SRS-reference signal received power (SRS-Reference Signal Received Power, SRS-RSRP) measurement). For CLI-RSSI measurement, victim/interfered UE measures total received power on CLI-RSSI resources. For SRS-RSRP measurement, victim/interfered UE performs RSRP measurement on configured SRS resources transmitted by one or more attackers/interfering UEs. Then, for CLI-RSSI measurement and SRS-RSRP measurement, layer-3 filtering may be applied to measurement results. For reporting of CLI-RSSI and SRS-RSRP measurement results, event-triggered reporting and periodic reporting (that is, periodic reporting) are supported. In addition, CLI measurement and reporting may be configured for the NR cell in a multicarrier option.

A related L3 CLI reporting mode is transmission through a physical uplink shared channel (Physical Uplink Shared Channel, PUSCH), and specifically, transmission through a UL-SCH on the PUSCH.

### Beamforming

In a high-frequency communication system, to overcome a path loss, an access network device and a terminal device usually use directional high-gain antenna arrays to form analog beams for communication. High-quality communication can be implemented between the access network device and the terminal device only when sending and receiving directions are aligned. For each physical channel or physical signal, the access network device may instruct the terminal device how to receive a downlink physical channel or a downlink physical signal, and may also instruct the terminal device how to send an uplink physical channel or an uplink physical signal. The access network device may provide a downlink beam indication or an uplink beam indication for the terminal device by using beam indication signaling, such as higher layer signaling (such as RRC or MAC-CE) and/or physical layer signaling (such as DCI) and/or a predefined rule. For example, a spatial relation (spatial relation) of a PUSCH scheduled by DCI format 0_0 in a cell is consistent with a spatial relation of resources of a physical uplink control channel (Physical Uplink Control Channel, PUCCH) with a lowest ID in an active UL BWP of the cell [refer to section 9.2.1 of TS 38.213]. The downlink beam indication is based on a transmission configuration indicator state (transmission configuration Indicator state, TCI state), and the uplink beam indication is based on a spatial relation (spatial relation).

### Quasi co-location (Quasi Co-Location, QCL):

If a channel feature on a symbol of an antenna port can be derived from another antenna port, it is considered that the two ports are QCLed, and a channel estimation result obtained from one port can be used for the other port.

The concept of QCL helps UE perform channel estimation, frequency offset error estimation, and synchronization processing. NR has four types of QCL in total in the following Table 1. QCL types A, B, and C are used in all frequency bands, while QCL type D is used only in a high frequency band (above 6 GHz). Because of the high frequency band, UE cannot perform omnidirectional transmission in essence, that is, beamforming is required.

**Table 1**

| Type | Feature | Purpose |
|---|---|---|
| QCL type A | Doppler shift, Doppler spread, average delay, and delay spread | To obtain channel estimation information |
| QCL type B | Doppler shift and Doppler spread | To obtain channel estimation information |
| QCL type C | Doppler shift and average delay | To obtain measurement information such as RSRP |
| QCL type D | Spatial Rx parameter | To assist the UE in beamforming |

### Higher layer configuration

A higher layer configures QCL by using a TCI state, and the network uses the TCI state to represent a QCL source reference signal (such as a synchronization signal and PBCH block (Synchronization Signal and PBCH block, SSB) or a channel state information-reference signal (Channel State Information-Reference Signal, CSI-RS)), and a QCL type (one of QCL types A, B, C, and D) from which large-scale parameters can be obtained. A TCI means a transmission configuration indicator, and this field is included in DCI to indicate quasi co-location of an antenna port of a physical downlink shared channel (Physical Downlink Shared Channel, PDSCH).

A protocol specifies an available TCI state configuration (State Configuration) for each target reference signal, and a plurality of TCI state configurations may be configured for one target reference signal. In a configuration of a target reference signal resource (for a CSI-RS) or a configuration of a PDSCH or a physical downlink control channel (Physical Downlink Control Channel, PDCCH) (for a demodulation reference signal (DeModulation Reference Signal, DMRS)), the base station configures a TCI state that can be used therefor. Activation or indication modes for various target reference signals are shown in the following Table 2.

**Table 2**

| Target RS | Activation or indication mode |
|---|---|
| CSI-RS | For a periodic (Periodic) CSI-RS: |
| | The TCI state is configured by using RRC signaling and activated directly after a specified time. |
| | For a semi-persistent (Semi-persistent) CSI-RS, when a semi-persistent CSI-RS or channel state information-interference measurement resource set (Channel State Information-Interference Measurement resource set, CSI-IM resource set) is activated by a media access control control element (Media Access Control Control Element, MAC CE), a TCI state ID is indicated for each resource of a corresponding non-zero power channel state information-reference signal (Non-Zero Power CSI-RS, NZP CSI-RS) resource set. |
| | For an aperiodic (Aperiodic) CSI-RS: |
| | The TCI state is indicated by a CSI Request field of DCI. |
| | The CSI Request field has a total of 6 bits, which may correspond to a maximum of 63 aperiodic trigger states (Aperiodic Trigger State). |
| | An aperiodic trigger state list (Aperiodic Trigger State List) may be configured for the UE, and each aperiodic trigger state in the list corresponds to a plurality of report configurations (Report Configuration, Report Config). A plurality of CSI-RS resource sets may be configured in each Report Config, a plurality of resources may be configured in each CSI-RS resource set, and each resource corresponds to one TCI state. In this way, a TCI state of an aperiodic CSI-RS can be indicated by using a CSI request. A maximum of 128 aperiodic trigger states may be configured for the UE, and the network selects a maximum of 63 trigger states for activation by using a subset (subselection) MAC CE. |
| PDCCH demodulation reference signal (DeModulation Reference Signal, DMRS) | The TCI state is configured by using RRC signaling (a TCI state is configured in a control resource set (Control Resource SET, CORESET)), and activated based on the following conditions: |
| | 1. If one TCI state is configured, the UE can directly use the TCI state. |
| | 2. If a plurality of TCI states are configured, one TCI state is selected for activation by using a MAC CE. |
| PDSCH DMRS | There are two methods: |
| | 1. A TCI state of a PDCCH DMRS is directly used. |
| | (1) In a case that a PDSCH is scheduled by DCI format 1_0, no TCI is carried. |
| | (2) In a case that a PDSCH is scheduled by DCI format 1_1, if a time interval (scheduling time) from reception of DCI to corresponding PDSCH transmission is shorter than a time period indicated by a parameter - timeDurationForQCL, QCL is maintained with a CORESET with a lowest ID in a scheduling slot (slot) of a last CORESET including a downlink control channel (a last CORESET with a lowest ID is used as a default QCL reference). Otherwise, refer to 2. |
| | 2. The TCI state is configured by using RRC signaling, activated by a MAC CE, and indicated by DCI. |
| | In a case that a PDSCH is scheduled by DCI format 1_1, if a time interval (scheduling time) from reception of DCI to corresponding PDSCH transmission is longer than or equal to a time period indicated by a parameter - timeDurationForQCL, a QCL reference is obtained based on a TCI in the DCI. |

A method for measuring and reporting cross-link interference according to the embodiments of this application is hereinafter described in detail by using some embodiments and application scenarios thereof with reference to the accompanying drawings.

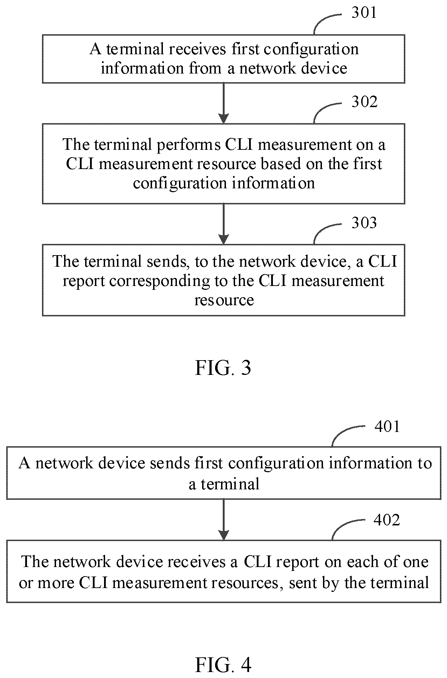

Referring to FIG. 3, an embodiment of this application provides a method for measuring and reporting cross-link interference. The method is performed by a terminal. The method includes the following steps.

Step 301: The terminal receives first configuration information from a network device, where the first configuration information includes first information and/or second information.

Step 302: The terminal performs CLI measurement on a CLI measurement resource based on the first configuration information.

Step 303: The terminal sends, to the network device, a CLI report corresponding to the CLI measurement resource, where
the first information is used to configure or indicate spatial relation information corresponding to each CLI measurement resource, and the second information is used to configure or indicate a configuration parameter for CLI measurement.

In this embodiment of this application, the network device configures, for the terminal, the spatial relation information corresponding to each CLI measurement resource and/or the configuration parameter for CLI measurement. Therefore, on one hand, CLI measurement and reporting are implemented on a per-beam basis, which helps improve accuracy of CLI measurement in high-frequency communication. On the other hand, flexibility and latency of CLI measurement and reporting are better.

The first information may also be referred to as spatial information, spatial reception information, spatial relation information, or spatial relation information. Specifically, the first information may be used to configure or indicate beam information or a spatial reception parameter corresponding to each CLI measurement resource. Therefore, the first information may also be referred to as beam information, and specific information content is, for example, a TCI state or QCL or QCL-D. The terminal performs reception, measurement, and reporting based on the configured or indicated beam information.

The second information is used to configure or indicate the configuration parameter for CLI measurement, and the measurement configuration parameter includes at least one of the following:
a reference signal for measurement, a time-frequency domain location of a measurement resource, measurement report content/type/threshold, a period and an offset (for periodicity), a physical resource used for CLI reporting, and the like.

In a possible implementation, the method further includes:
in a case that the terminal performs measurement and reporting on a first CLI measurement resource for which no spatial relation information is configured or indicated, the terminal determines spatial relation information for the first CLI measurement resource according to at least one of the following rules:
(1) quasi co-location type D (QCL-D) of the first CLI measurement resource is the same as QCL-D of a last received physical downlink shared channel (last received PDSCH);
(2) QCL-D of the first CLI measurement resource is the same as QCL-D of a last monitored control resource set (CORESET) (last monitored CORESET);
(3) QCL-D of the first CLI measurement resource is the same as QCL-D of either a received PDSCH or a monitored CORESET (Last received PDSCH or monitored CORESET), whichever is more recent; that is, QCL-D of the first CLI measurement resource is the same as QCL-D of either the last received PDSCH or the last monitored CORESET, whichever is more recent;
(4) QCL-D of the first CLI measurement resource is the same as QCL-D of a CORESET with a smallest index in an active downlink bandwidth part (Bandwidth Part, BWP); and
(5) a QCL source of the first CLI measurement resource is determined in a predefined manner, for example, a QCL source of CLI is determined based on a joint transmission configuration indicator state (DLorJoint-TCIState) (if DLorJoint-TCIState is configured).

In this embodiment of this application, if corresponding receive beam information is not configured for a CLI measurement resource, a receive beam for the CLI measurement resource is determined in a predefined manner. For example, QCL-D of the CLI measurement resource is the same as QCL-D of the last received PDSCH (if the PDSCH exists) or the last monitored CORESET or the CORESET with the smallest index in the active BWP, or the QCL source of CLI is determined based on DLorJoint-TCIState (if DLorJoint-TCIState is configured).

Optionally, the QCL source of the CLI measurement resource may be a synchronization signal or physical broadcast channel signal block (or a synchronization signal and PBCH block) (Synchronization Signal and PBCH block, SSB), a tracking reference signal (tracking reference signal, TRS), a CSI-RS for beam management, or the like.

Optionally, in a case of UE-to-UE CLI, originating UE also complies with the QCL, that is, a network device corresponding to the originating UE configures the originating UE to send beam information for a CLI-RS.

In a possible implementation, the method further includes:
the terminal receives, from the network device, third information for triggering aperiodic CLI measurement and reporting, where the third information includes any one of the following:
(1) uplink grant (UL grant) information, where optionally, a corresponding CLI report is transmitted on a PUSCH scheduled by a UL grant;
(2) downlink grant (DL grant) information, where optionally, a corresponding CLI report is transmitted on a PUCCH scheduled by a DL grant; and
(3) group common downlink control information (group common DCI), where optionally, corresponding CLI may be transmitted on an uplink channel determined by a predefined rule, such as a PUCCH or a PUSCH.

For example, DCI triggers the UE to feed back a CLI report after a specific time unit (which may be indicated by a higher layer configuration or DCI), and the report is transmitted on the PUCCH, where the PUCCH resource is determined based on the number of bits of the CLI or the PUCCH resource is determined based on the higher layer configuration.

For content of the CLI report, in a possible implementation:
(1) the CLI report includes only first indication information, where the first indication information is used to indicate a CLI measurement value corresponding to the CLI measurement resource;
   that is, the UE reports each CLI measurement value (it is not necessary to determine whether a predefined condition is met in this case), and optionally, the CLI report includes only one part; or
(2) the CLI report includes first indication information and second indication information, where the first indication information is used to indicate a CLI measurement value corresponding to the CLI measurement resource, and the second indication information is used to indicate whether the CLI measurement value meets a first condition or the second indication information is used to indicate whether the CLI report includes the first indication information;

that is, for each CLI report, the UE determines, based on whether the predefined condition is met, whether to report the CLI measurement value; and optionally, the CLI report includes two parts, where part 1 indicates whether the predefined condition is met or whether there is part 2, and part 2 indicates the CLI measurement value, where
the first condition includes one or more of the following:
   (1) the CLI measurement value is greater than a first threshold;
   (2) a variation of the CLI measurement value is greater than a second threshold; and
   (3) a value of a beam failure instance (beam failure instance, BFI) is greater than a third threshold, where optionally, the third threshold is less than a trigger threshold for beam failure recovery (beam failure recovery, BFR).

It should be noted that the CLI includes one part of indications. It may be understood that the CLI report includes only one part, where operations such as encoding and mapping are performed on this part as a whole, and there is only one part in any case (regardless of whether the predefined condition is met).

The CLI report including a first indication and a second indication may be understood as including two parts, including the first indication information and the second indication information. Operations such as encoding and mapping may be performed on the two parts separately. Existence of the first indication information may depend on a value of the second indication information. For example, if the value of the second indication information meets a condition, the first indication information part exists, or if the value of the second indication information does not meet a condition, the first indication information part does not exist.

In a possible implementation, the sending, to the network device, a CLI report corresponding to the CLI measurement resource includes one or more of the following:
(1) in a case that the CLI report and a CSI report are transmitted on a same channel and that the CLI report includes only the first indication information, jointly encoding and mapping the first indication information with part 1 (CSI part 1) of the CSI report, or jointly encoding and mapping the first indication information with part 2 (CSI part 2) of the CSI report; and
(2) in a case that the CLI report and the CSI report are transmitted on the same channel and that the CLI report includes the first indication information and the second indication information, jointly encoding and mapping the first indication information with CSI part 2, and jointly encoding and mapping the second indication information with CSI part 1.

Optionally, the CLI report belongs to a type of CSI report, and preferably, the CLI is transmitted in the same way as the CSI report; and
if the CLI includes only one part, when the CLI and existing CSI are transmitted on a same channel, the CLI is jointly encoded and mapped with CSI part 1 or CSI part 2; or
if the CLI includes two parts, part 1 thereof is jointly encoded with CSI part 1, and part 2 thereof is jointly encoded with CSI part 2.

In a possible implementation, the sending, to the network device, a CLI report corresponding to the CLI measurement resource includes one or more of the following:
(1) in a case that the CLI report and first uplink information are transmitted on a same channel and that the CLI report includes only the first indication information, jointly encoding and mapping the CLI report with the first uplink information; and
(2) in a case that the CLI report and the first uplink information are transmitted on the same channel and that the CLI report includes the first indication information and the second indication information, separately encoding and mapping the first indication information, and jointly encoding and mapping the second indication information with the first uplink information, where
the first uplink information includes a hybrid automatic repeat request acknowledgement (Hybrid Automatic Repeat request-ACK, HARQ-ACK) and/or a scheduling request (Scheduling request, SR).

In other words, the CLI report is transmitted on an uplink PUCCH and/or PUSCH as UCI;
when the CLI and the HARQ-ACK (or the HARQ-ACK and the SR) are transmitted on one channel:
i. the CLI is jointly encoded and mapped with the HARQ-ACK; and
ii.if the CLI includes two parts, part 1 thereof is jointly encoded and mapped with the HARQ-ACK, and part 2 thereof is mapped separately; or
when the CLI and CSI are transmitted on one channel:
   i. if the CLI includes only one part, when the CLI and existing CSI are transmitted on a same channel, the CLI is jointly encoded and mapped with CSI part 1 or CSI part 2; or if the CLI includes two parts, part 1 thereof is jointly encoded with CSI part 1, and part 2 thereof is jointly encoded with CSI part 2.

In a possible implementation, the sending, to the network device, a CLI report corresponding to the CLI measurement resource includes one or more of the following:
(1) in a case that the CLI report, a CSI report, and first uplink information are transmitted on a same channel, discarding the CLI report or the CSI report;
(2) in a case that the CLI report, the CSI report, and the first uplink information are transmitted on the same channel and that the CLI report includes only the first indication information, jointly encoding and mapping the CLI report, CSI part 1, and the first uplink information, or jointly encoding the CLI report with CSI part 2; and
(3) in a case that the CLI report, the CSI report, and the first uplink information are transmitted on the same channel and that the CLI report includes the first indication information and the second indication information, jointly encoding and mapping the first indication information with CSI part 2, and jointly encoding and mapping the second indication information with CSI part 1 and the first uplink information, where
the first uplink information includes a HARQ-ACK and/or an SR.

When the CLI and CSI and the HARQ-ACK (or the HARQ-ACK and the SR) are transmitted on one channel:
i. the CLI or the CSI is discarded; and optionally, discarding the CLI may be predefined, or discarding the CSI is predefined, or the one with a lower priority is discarded according to a predefined rule, for example, based on priorities of the CLI and the CSI; or
ii.if the CLI includes only one part, the CLI is jointly encoded and mapped with CSI part 1 and the HARQ-ACK, or the CLI is jointly encoded with CSI part 2; or if the CLI includes two parts, part 1 thereof is jointly encoded with CSI part 1 and the HARQ-ACK, and part 2 thereof is jointly encoded with CSI part 2.

In a possible implementation, the method further includes:
the terminal determines a priority of the CLI report according to at least one of the following rules:
(1) a priority of a periodic CLI report is lower than a priority of an aperiodic CLI report; that is, periodic L1 CLI report < aperiodic L1 CLI report;
(2) a priority of a CLI report is higher than a priority of an aperiodic CSI report (aperiodic-CSI report, A-CSI report), that is, L1 CLI report > A-CSI report;
(3) a priority of an aperiodic CLI report is lower than a priority of an aperiodic CSI report; that is, aperiodic L1 CLI report < A-CSI report;
(4) a priority of a periodic CLI report is lower than a priority of a periodic CSI report; that is, periodic L1 CLI report < periodic CSI report; and
(5) a priority of a periodic CSI report is lower than a priority of an aperiodic CLI report; that is, periodic CSI report < aperiodic L1 CLI report.

In a possible implementation, the method further includes:
the terminal receives first trigger information and second trigger information from the network device, where the first trigger information is used to trigger an aperiodic CLI report and the second trigger information is used to trigger an aperiodic CSI report, where
the first trigger information may be referred to as an aperiodic L1 CLI trigger, and the second trigger information may be referred to as an A-CSI report trigger; and
the terminal performs at least one of the following:
   (1) the terminal is triggered to send the aperiodic CLI report and the aperiodic CSI report in different time units based on the first trigger information and the second trigger information; and optionally, the terminal is not expected to be triggered to send the aperiodic L1 CLI and the A-CSI report in one slot;
   (2) the terminal is triggered to send the aperiodic CLI report and the aperiodic CSI report in different time units based on the first trigger information and the second trigger information, where the first trigger information and the second trigger information are transmitted using different DCIs; that is, if the aperiodic L1 CLI trigger and the A-CSI report trigger are sent by using different DCIs, optionally, the terminal is not expected to be triggered to send the aperiodic L1 CLI and the A-CSI report in one slot;
   (3) the terminal is triggered to send the aperiodic CLI report and the aperiodic CSI report in a same time unit based on the first trigger information and the second trigger information; and optionally, triggered to send the aperiodic L1 CLI and the A-CSI report in one slot (regardless of whether the aperiodic L1 CLI trigger and the A-CSI report trigger are sent by using different or same DCI); and
   (4) the terminal is triggered to send the aperiodic CLI report and the aperiodic CSI report in the same time unit based on the first trigger information and the second trigger information, where the first trigger information and the second trigger information are transmitted in the same DCI; and optionally, if the aperiodic L1 CLI trigger and the A-CSI report trigger are sent in the same DCI, the aperiodic L1 CLI and the A-CSI report may be sent in one slot.

It should be noted that the foregoing time unit may be a frame, a subframe, a slot, a sub-slot, a symbol, a symbol set, or the like.

In a possible implementation, in a case that the terminal is triggered to send the aperiodic CLI report and the aperiodic CSI report in the same time unit, the method further includes any one of the following:
(1) the terminal sends the aperiodic CLI report or the aperiodic CSI report; and optionally, the UE determines, according to a predefined rule, to send only the aperiodic L1 CLI or send only the A-CSI report;
(2) the terminal sends the aperiodic CLI report and the aperiodic CSI report; that is, the UE sends the aperiodic L1 CLI and the A-CSI report;
(3) in a case that the aperiodic CLI report and the aperiodic CSI report are transmitted on a same channel, the terminal sends the aperiodic CLI report or the aperiodic CSI report; that is, if the aperiodic L1 CLI and the A-CSI report are on a same channel, the UE sends only the aperiodic L1 CLI or the A-CSI report;
(4) in a case that the aperiodic CLI report and the aperiodic CSI report are transmitted on different channels (for example, two channels in different serving cells or on non-overlapping time domain resources), the terminal sends the aperiodic CLI report and the aperiodic CSI report; that is, if the aperiodic L1 CLI and the A-CSI report are on different channels, the UE sends the aperiodic L1 CLI and the A-CSI report separately, where optionally, channel resources corresponding to the aperiodic L1 CLI and the A-CSI report do not collide (for example, the channel resources are in different serving cells or the time domain resources do not overlap);
(5) in a case that the aperiodic CLI report and the aperiodic CSI report are transmitted on the same channel, the terminal sends the aperiodic CLI report and the aperiodic CSI report; that is, if the aperiodic L1 CLI and the A-CSI report are on the same channel, the UE sends the aperiodic L1 CLI and the A-CSI report; and
(6) in a case that the aperiodic CLI report and the aperiodic CSI report are transmitted on different channels, the terminal sends the aperiodic CLI report or the aperiodic CSI report; that is, if the aperiodic L1 CLI and the A-CSI report are on different channels, the UE sends only the aperiodic L1 CLI or the A-CSI report; and optionally, the UE determines, in the following manners, to send the CLI or the CSI:
   (6.1) the UE sends the CSI;
   (6.2) the UE sends the CLI;
   (6.3) the UE determines, based on priorities of the CSI and the CLI, to send the one with a higher priority; and
   (6.4) the UE determines, based on a time of trigger signaling (DCI) transmission of the CSI and a time of trigger signaling transmission of the CLI, for example, to transmit the one with an earlier trigger time, where the trigger time may be a start/end symbol of a PDCCH/CORESET in which the DCI for sending trigger signaling is located.

In a possible implementation, the method further includes:
in a case that the CLI report and a CSI report are transmitted on a same channel and that transmission resources do not meet simultaneous transmission of all report content of the CLI report and the CSI report, where that transmission resources do not meet simultaneous transmission of all report content of the CLI report and the CSI report may be that when the CLI report and the CSI report are both transmitted on the same channel, a maximum bit rate or a predefined bit rate corresponding to the channel is exceeded, the terminal performs any one of the following rules:
(1) discarding in an order of the CLI report, CSI part 2 in the CSI report, and CSI part 1 in the CSI report, and in a case that a plurality of CLI reports exist, discarding one or more CLI reports in a preset order; that is, the UE first discards CLI, and then discards CSI (in an existing order, for example, first CSI part 2 and then CSI part 1); when a plurality of CLI reports exist, the UE discards one or more CLI reports in an internal order of CLI (for example, an order of priorities of CLI is defined, for example, based on an index configured for CLI, the smaller the index, the higher the priority), that is, a descending order of priorities is CSI part 1 > CSI part 2 > CLI;
(2) discarding in an order of CSI part 2 in the CSI report, the CLI report, and CSI part 1 in the CSI report, and in a case that a plurality of CLI reports exist, discarding one or more CLI reports in a preset order; that is, the UE first discards CSI part 2 and then discards CLI; when a plurality of CLI reports exist, the UE discards one or more CLI reports in an internal order of CLI (for example, an order of priorities of CLI is defined, for example, based on an index configured for CLI, the smaller the index, the higher the priority), and then discards CSI part 1, that is, a descending order of priorities is CSI part 1 > CLI > CSI part 2; if a plurality of CSI reports are included, the UE first discards one or more CSI parts 2 in the plurality of CSI reports; if CSI parts 2 in all CSI reports are discarded, the UE discards CLI; if all CLI reports are discarded, the UE discards one or more CSI parts 1 in the plurality of CSI reports, where when CLI is discarded, if a CLI report includes first indication information and second indication information, the UE first discards first indication information in one or more pieces of CLI, and if first indication information in all CLI is discarded, then discards the second indication information in the CLI; or the UE first discards CSI part 2 until parts 2 in all CSI are discarded, and then discards the first indication information (if any) until first indication information of all CLI is discarded, and then discards CSI part 1; and
(3) discarding in an order of CSI part 2 in the CSI report, CSI part 1 in the CSI report, and the CLI report, and in a case that a plurality of CLI reports exist, discarding one or more CLI reports in a preset order; that is, the UE first discards CSI part 2, then discards CSI part 1, and then discards CLI, that is, a priority of CLI is the highest. It should be noted that, there is a case that the priority of CLI is lower than priorities of some CSI reports, but higher than priorities of other CSI reports, and discarding is performed based on priorities of CSI and CLI, that is, CLI/CSI with a low priority is discarded first, and then CLI/CSI with a high priority is discarded. For a CLI report, first indication information is discarded first, and then second indication information is discarded, or the entire CLI report is discarded. For a CSI report, CSI part 2 is discarded first, and then CSI part 1 is discarded.

In a possible implementation, the method further includes:
in a case that the terminal is configured with discontinuous reception (Discontinuous Reception, DRX) and/or detects DCI with a cyclic redundancy check (Cyclic redundancy check, CRC) scrambled by a power saving radio network temporary identifier (Power Saving Radio Network Temporary Identifier, PS-RNTI), sending the CLI report to the network device:
(1) sending the CLI report to the network device within a DRX active time; that is, reporting can be performed only within the DRX active time; and
(2) determining, based on a configuration of the network device, whether to send the CLI report to the network device within a DRX inactive time; that is, the network may configure whether to report the L1 CLI report when the terminal is within the DRX inactive time; optionally, the L1 CLI report is a periodic or semi-persistent L1 CLI report.

Referring to FIG. 4, an embodiment of this application provides a method for measuring and reporting cross-link interference. The method is performed by a network device. The method includes the following steps.

Step 401: The network device sends first configuration information to a terminal, where the first configuration information includes first information and/or second information.

Step 402: The network device receives a CLI report on each of one or more CLI measurement resources, sent by the terminal, where
the first information is used to configure or indicate spatial relation information corresponding to each CLI measurement resource, and the second information is used to configure or indicate a configuration parameter for CLI measurement.

In this embodiment of this application, the network device configures, for the terminal, the spatial relation information corresponding to each CLI measurement resource and/or the configuration parameter for CLI measurement. Therefore, on one hand, CLI measurement and reporting are implemented on a per-beam basis, which helps improve accuracy of CLI measurement in high-frequency communication. On the other hand, flexibility and latency of CLI measurement and reporting are better.

The first information may also be referred to as spatial information, spatial reception information, or spatial relation information. Specifically, the first information may be used to configure or indicate beam information corresponding to each CLI measurement resource. Therefore, the first information may also be referred to as beam information, and specific information content is, for example, a TCI state or QCL or QCL-D. The terminal performs reception, measurement, and reporting based on the configured or indicated beam information.

The second information is used to configure or indicate the configuration parameter for CLI measurement, and the measurement configuration parameter includes at least one of the following:
a reference signal for measurement, a time-frequency domain location of a measurement resource, measurement report content/type/threshold, a period and an offset (for periodicity), and the like.

In a possible implementation, the method further includes:
the network device sends, to the terminal, third information for triggering aperiodic CLI measurement and reporting, where the third information includes any one of the following:
(1) UL grant information, where optionally, a corresponding CLI report is transmitted on a PUSCH scheduled by a UL grant;
(2) DL grant information, where optionally, a corresponding CLI report is transmitted on a PUCCH scheduled by a DL grant; and
(3) group common DCI, where optionally, corresponding CLI may be transmitted on an uplink channel determined by a predefined rule, such as a PUCCH or a PUSCH.

For example, DCI triggers feedback of a CLI report after a specific time unit (which may be indicated by a higher layer configuration or DCI), and the report is transmitted on the PUCCH, where the PUCCH resource is determined based on the number of bits of the CLI or the PUCCH resource is determined based on the higher layer configuration.

For content of the CLI report, in a possible implementation:
(1) the CLI report includes only first indication information, where the first indication information is used to indicate a CLI measurement value corresponding to the CLI measurement resource;
   that is, the terminal reports each CLI measurement value (it is not necessary to determine whether a predefined condition is met in this case), and optionally, the CLI report includes only one part; or
(2) the CLI report includes first indication information and second indication information, where the first indication information is used to indicate a CLI measurement value corresponding to the CLI measurement resource, and the second indication information is used to indicate whether the CLI measurement value meets a first condition or the second indication information is used to indicate whether the CLI report includes the first indication information;

that is, for each CLI report, the terminal determines, based on whether the predefined condition is met, whether to report the CLI measurement value; and optionally, the CLI report includes two parts, where part 1 indicates whether the predefined condition is met or whether there is part 2, and part 2 indicates the CLI measurement value, where
the first condition includes one or more of the following:
   (1) the CLI measurement value is greater than a first threshold;
   (2) a variation of the CLI measurement value is greater than a second threshold; and
   (3) a value of a beam failure instance (beam failure instance, BFI) is greater than a third threshold, where the third threshold is less than a trigger threshold for beam failure recovery (beam failure recovery, BFR).

It should be noted that the CLI includes one part of indications. It may be understood that the CLI report includes only one part, where operations such as encoding and mapping are performed on this part as a whole, and there is only one part in any case (regardless of whether the predefined condition is met).

The CLI report including a first indication and a second indication may be understood as including two parts, where one part is used to indicate X, and the other part is used to indicate Y. Operations such as encoding and mapping may be performed on the two parts separately. Existence of part 2 may depend on a value of X. For example, if the value of X meets a condition, the part indicated by Y exists; or if the value of X does not meet a condition, the part indicated by Y does not exist.

The technical solutions of this application are hereinafter described with reference to specific examples.

### Example 1:

A conventional configuration of a CLI-RSSI measurement resource does not include information for configuring a receive beam, such as a TCI state or QCL-D. To measure and report CLI in different beam directions, a base station may configure or indicate corresponding receive beam information for each CLI measurement resource, such as a TCI state or QCL-D. For example, TCI state information is configured in parameters RSSI-ResourceConfigCLI and/or srs-ResourceConfig. On a UE side, UE performs reception, measurement, and reporting based on a configured or indicated beam direction. If corresponding receive beam information is not configured for a CLI-RS, a receive beam for the CLI measurement resource is determined in a predefined manner. For example, if corresponding QCL-D is not configured for a CLI-RS, QCL-D of the CLI measurement resource is the same as QCL-D of a last received PDSCH (if any) or a last monitored CORESET.

### Example 2:

In a conventional manner, if UE is configured to transmit a plurality of CSI PUCCHs in one slot, if the UE is not configured with a plurality of CSI PUCCH resources (parameter multi-channel state information physical uplink control channel resource list (multi-CSI-PUCCH-ResourceList)) or there is no overlapping CSI PUCCH in the slot, the UE determines a first resource, where the first resource corresponds to a CSI report with a highest priority.

If the first resource includes PUCCH format 2, and some of remaining CSI PUCCHs in the slot do not overlap the first resource, the UE determines a CSI report with a highest priority among remaining CSI reports (CSI reports corresponding to resources that do not overlap the first resource) and uses a second resource corresponding to the CSI report as an additional resource to transmit the CSI report.

If the first resource includes PUCCH format 3 or format 4, and the remaining CSI PUCCHs in the slot include PUCCH format 2, and some do not overlap the first resource, the UE determines a CSI report with a highest priority among the remaining CSI reports (CSI reports corresponding to resources that do not overlap the first resource and are PUCCH format 2) and uses a second resource corresponding to the CSI report as an additional resource to transmit the CSI report.

If the UE is configured with multi-CSI PUCCH resources (parameter multi-CSI-PUCCH-ResourceList) or there are any overlapping CSI PUCCHs in the slot, the UE multiplexes all CSI reports in the slot on one PUCCH configured in multi-CSI-PUCCH-ResourceList.

If the UE is configured with L1 CLI reporting, such as periodic L1 CLI reporting, L1 CLI is transmitted on a PUCCH. In this case, it is possible that a CLI PUCCH and a CSI PUCCH (which notably refers to a CSI report in the prior art and does not include L1 CLI) are transmitted simultaneously in one slot. How to transmit CLI and CSI needs to be considered.

When the technical solutions of this application are used, the CLI is regarded as CSI with a lowest priority or CSI with a predefined rule priority, and the transmitted CSI and/or CLI is determined in the foregoing manner.

In other words, if the UE is configured to transmit a plurality of CSI PUCCHs and/or L1 CLI PUCCHs in one slot,
if the UE is not configured with multi-CSI PUCCH resources (parameter multi-CSI-PUCCH-ResourceList) or there is no overlapping CSI/CLI PUCCH in the slot, the UE determines a first resource, where the first resource corresponds to a CSI/CLI report with a highest priority.

If the first resource includes PUCCH format 2, and some of remaining CSI/CLI PUCCHs in the slot do not overlap the first resource, the UE determines a CSI/CLI report with a highest priority among the remaining CSI/CLI reports (CSI/CLI reports corresponding to resources that do not overlap the first resource) and uses a second resource corresponding to the CSI/CLI report as an additional resource to transmit the CSI/CLI report.

If the first resource includes PUCCH format 3 or format 4, and the remaining CSI/CLI PUCCHs in the slot include PUCCH format 2, and some do not overlap the first resource, the UE determines a CSI/CLI report with a highest priority among the remaining CSI/CLI reports (CSI/CLI reports corresponding to resources that do not overlap the first resource and are PUCCH format 2) and uses a second resource corresponding to the CSI/CLI report as an additional resource to transmit the CSI/CLI report.

If the UE is configured with multi-CSI PUCCH resources (parameter multi-CSI-PUCCH-ResourceList) or there are any overlapping CSI/CLI PUCCHs in the slot, the UE multiplexes all CSI/CLI reports in the slot on one PUCCH configured in multi-CSI-PUCCH-ResourceList.

If the UE multiplexes a plurality of CSI/CLI reports on one PUCCH/PUSCH for transmission, if resources are insufficient, for example, if a maximum PRB corresponding to PUCCH resources is used but its bit rate exceeds a bit rate corresponding to the PUCCH format, or if the bit rate exceeds a specific threshold when a plurality of CSI/CLI reports are transmitted on a PUSCH, the UE needs to discard some CSI/CLI until the bit rate meets a requirement. The UE may discard CSI and/or CLI in an order of priorities.

The method for measuring and reporting cross-link interference according to the embodiments of this application may be performed by an apparatus for measuring and reporting cross-link interference. An apparatus for measuring and reporting cross-link interference according to the embodiments of this application is described by assuming that the method for measuring and reporting cross-link interference is performed by the apparatus for measuring and reporting cross-link interference in the embodiments of this application.

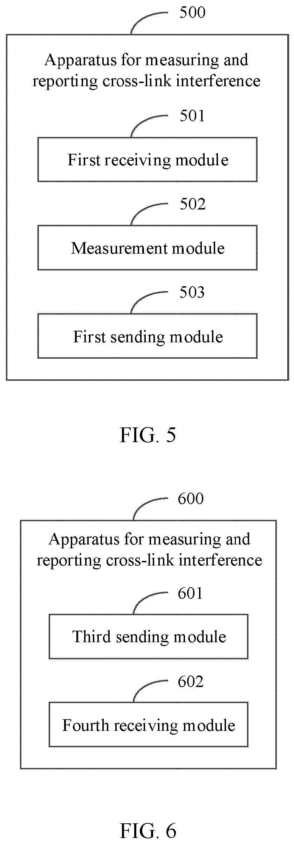

Referring to FIG. 5, an embodiment of this application provides an apparatus 500 for measuring and reporting cross-link interference. The apparatus includes:
a first receiving module 501, configured to receive first configuration information from a network device, where the first configuration information includes first information and/or second information;
a measurement module 502, configured to perform CLI measurement on a CLI measurement resource based on the first configuration information; and
a first sending module 503, configured to send, to the network device, a CLI report corresponding to the CLI measurement resource, where
the first information is used to configure or indicate spatial relation information corresponding to each CLI measurement resource, and the second information is used to configure or indicate a configuration parameter for CLI measurement.

Optionally, the apparatus further includes:
a determining module, configured to: in a case that measurement and reporting are performed on a first CLI measurement resource for which no spatial relation information is configured or indicated, determine a spatial relation for the first CLI measurement resource according to at least one of the following rules:
QCL-D of the first CLI measurement resource is the same as QCL-D of a last received physical downlink shared channel PDSCH;
QCL-D of the first CLI measurement resource is the same as QCL-D of a last monitored control resource set CORESET;
QCL-D of the first CLI measurement resource is the same as QCL-D of either a received PDSCH or a monitored CORESET, whichever is more recent;
QCL-D of the first CLI measurement resource is the same as QCL-D of a CORESET with a smallest index in an active bandwidth part BWP; and
a QCL source of the first CLI measurement resource is determined in a predefined manner.

Optionally, the apparatus further includes:
a second receiving module, configured to receive, from the network device, third information for triggering aperiodic CLI measurement and reporting, where the third information includes any one of the following:
UL grant information;
DL grant information; and
group common DCI.

Optionally, the CLI report includes only first indication information, where the first indication information is used to indicate a CLI measurement value corresponding to the CLI measurement resource;
or
the CLI report includes first indication information and second indication information, where the first indication information is used to indicate a CLI measurement value corresponding to the CLI measurement resource, and the second indication information is used to indicate whether the CLI measurement value meets a first condition or the second indication information is used to indicate whether the CLI report includes the first indication information, where
the first condition includes one or more of the following:
   the CLI measurement value is greater than a first threshold;
   a variation of the CLI measurement value is greater than a second threshold; and
   a value of a BFI is greater than a third threshold, where the third threshold is less than a trigger threshold for beam failure recovery BFR.

Optionally, the first sending module is configured to perform one or more of the following:
in a case that the CLI report and a CSI report are transmitted on a same channel and that the CLI report includes only the first indication information, jointly encoding and mapping the first indication information with part 1 (CSI part 1) of the CSI report, or jointly encoding and mapping the first indication information with part 2 (CSI part 2) of the CSI report; and
in a case that the CLI report and the CSI report are transmitted on the same channel and that the CLI report includes the first indication information and the second indication information, jointly encoding and mapping the first indication information with CSI part 2, and jointly encoding and mapping the second indication information with CSI part 1.

Optionally, the first sending module is configured to perform one or more of the following:
in a case that the CLI report and first uplink information are transmitted on a same channel and that the CLI report includes only the first indication information, jointly encoding and mapping the CLI report with the first uplink information; and
in a case that the CLI report and the first uplink information are transmitted on the same channel and that the CLI report includes the first indication information and the second indication information, separately encoding and mapping the first indication information, and jointly encoding and mapping the second indication information with the first uplink information, where
the first uplink information includes a HARQ-ACK and/or an SR.

Optionally, the first sending module is configured to perform one or more of the following:
in a case that the CLI report, a CSI report, and first uplink information are transmitted on a same channel, discarding the CLI report or the CSI report;
in a case that the CLI report, the CSI report, and the first uplink information are transmitted on the same channel and that the CLI report includes only the first indication information, jointly encoding and mapping the CLI report, CSI part 1, and the first uplink information, or jointly encoding the CLI report with CSI part 2; and
in a case that the CLI report, the CSI report, and the first uplink information are transmitted on the same channel and that the CLI report includes the first indication information and the second indication information, jointly encoding and mapping the first indication information with CSI part 2, and jointly encoding and mapping the second indication information with CSI part 1 and the first uplink information, where
the first uplink information includes a HARQ-ACK and/or an SR.

Optionally, the apparatus further includes:
a second determining module, configured to determine a priority of the CLI report according to at least one of the following rules:
a priority of a periodic CLI report is lower than a priority of an aperiodic CLI report;
a priority of a CLI report is higher than a priority of an aperiodic CSI report;
a priority of an aperiodic CLI report is lower than a priority of an aperiodic CSI report;
a priority of a periodic CLI report is lower than a priority of a periodic CSI report; and
a priority of a periodic CSI report is lower than a priority of an aperiodic CLI report.

Optionally, the apparatus further includes:
a third receiving module, configured to receive first trigger information and second trigger information from the network device, where the first trigger information is used to trigger an aperiodic CLI report and the second trigger information is used to trigger an aperiodic CSI report; and
a first execution module, configured to perform at least one of the following:
   being triggered to send the aperiodic CLI report and the aperiodic CSI report in different time units based on the first trigger information and the second trigger information;
   being triggered to send the aperiodic CLI report and the aperiodic CSI report in different time units based on the first trigger information and the second trigger information, where the first trigger information and the second trigger information are transmitted using different DCIs;
   being triggered to send the aperiodic CLI report and the aperiodic CSI report in a same time unit based on the first trigger information and the second trigger information; and
   being triggered to send the aperiodic CLI report and the aperiodic CSI report in the same time unit based on the first trigger information and the second trigger information, where the first trigger information and the second trigger information are transmitted in the same DCI.

Optionally, in a case of being triggered to send the aperiodic CLI report and the aperiodic CSI report in the same time unit, the apparatus further includes:
a second sending module, configured to perform any one of the following:
sending the aperiodic CLI report or the aperiodic CSI report;
sending the aperiodic CLI report and the aperiodic CSI report;
in a case that the aperiodic CLI report and the aperiodic CSI report are transmitted on a same channel, sending the aperiodic CLI report or the aperiodic CSI report;
in a case that the aperiodic CLI report and the aperiodic CSI report are transmitted on different channels, sending the aperiodic CLI report and the aperiodic CSI report;
in a case that the aperiodic CLI report and the aperiodic CSI report are transmitted on the same channel, sending the aperiodic CLI report and the aperiodic CSI report; and
in a case that the aperiodic CLI report and the aperiodic CSI report are transmitted on different channels, sending the aperiodic CLI report or the aperiodic CSI report.

Optionally, the apparatus further includes:
a second execution module, configured to perform any one of the following rules in a case that the CLI report and a CSI report are transmitted on a same channel and that transmission resources do not meet simultaneous transmission of all report content of the CLI report and the CSI report:
discarding in an order of the CLI report, CSI part 2 in the CSI report, and CSI part 1 in the CSI report, and in a case that a plurality of CLI reports exist, discarding one or more CLI reports in a preset order;
discarding in an order of CSI part 2 in the CSI report, the CLI report, and CSI part 1 in the CSI report, and in a case that a plurality of CLI reports exist, discarding one or more CLI reports in a preset order; and
discarding in an order of CSI part 2 in the CSI report, CSI part 1 in the CSI report, and the CLI report, and in a case that a plurality of CLI reports exist, discarding one or more CLI reports in a preset order.

Optionally, in a case that DRX is configured and/or that DCI with a CRC scrambled by a PS-RNTI is detected, the first sending module is configured to:
send the CLI report to the network device within a DRX active time; and
determine, based on a configuration of the network device, whether to send the CLI report to the network device within a DRX inactive time.

Referring to FIG. 6, an embodiment of this application provides an apparatus 600 for measuring and reporting cross-link interference. The apparatus includes:
a third sending module 601, configured to send first configuration information to a terminal, where the first configuration information includes first information and/or second information; and
a fourth receiving module 602, configured to receive a CLI report on each of one or more CLI measurement resources, sent by the terminal, where
the first information is used to configure or indicate spatial relation information corresponding to each CLI measurement resource, and the second information is used to configure or indicate a configuration parameter for CLI measurement.

Optionally, the apparatus further includes:
a fourth sending module, configured to send, to the terminal, third information for triggering aperiodic CLI measurement and reporting, where the third information includes any one of the following:
UL grant information;
DL grant information; and
group common DCI.

Optionally, the CLI report includes only first indication information, where the first indication information is used to indicate a CLI measurement value corresponding to the CLI measurement resource;
or
the CLI report includes first indication information and second indication information, where the first indication information is used to indicate a CLI measurement value corresponding to the CLI measurement resource, and the second indication information is used to indicate whether the CLI measurement value meets a first condition, where
the first condition includes one or more of the following:
   the CLI measurement value is greater than a first threshold;
   a variation of the CLI measurement value is greater than a second threshold; and
   a value of a BFI is greater than a third threshold, where the third threshold is less than a trigger threshold for BFR.

The apparatus for measuring and reporting cross-link interference in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The apparatus for measuring and reporting cross-link interference according to this embodiment of this application can implement each process implemented in the method embodiments in FIG. 3 and FIG. 4, with the same technical effect achieved. To avoid repetition, details are not described herein again.

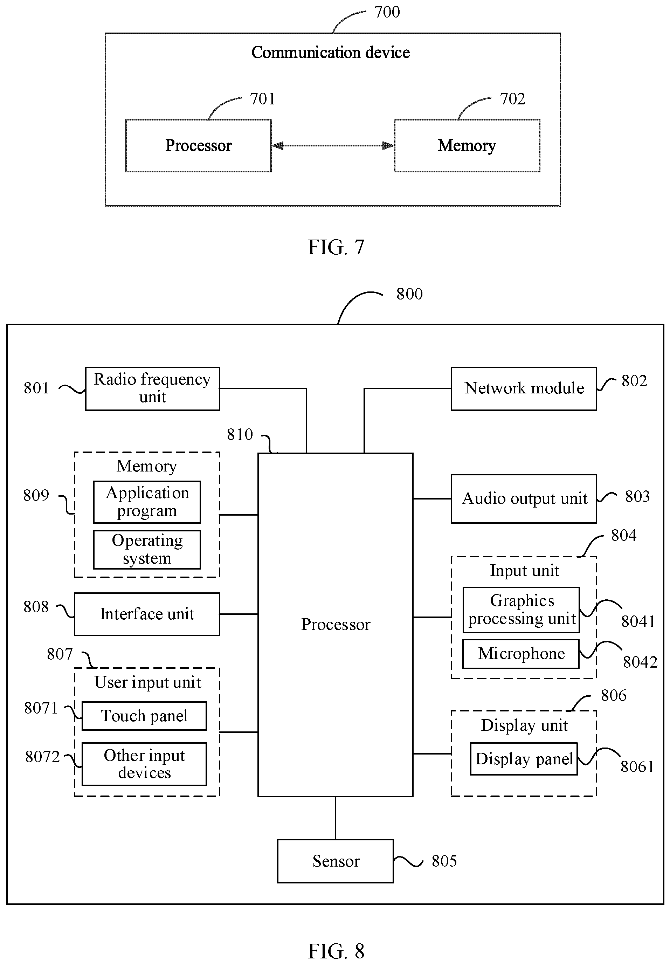

Optionally, as shown in FIG. 7, an embodiment of this application further provides a communication device 700, including a processor 701 and a memory 702. The memory 702 stores a program or instructions capable of running on the processor 701. For example, when the communication device 700 is a terminal, and the program or instructions are executed by the processor 701, the steps of the foregoing embodiment of the method for measuring and reporting cross-link interference are implemented, with the same technical effect achieved. When the communication device 700 is a network device, and the program or instructions are executed by the processor 701, the steps of the foregoing embodiment of the method for measuring and reporting cross-link interference are implemented, with the same technical effect achieved. To avoid repetition, details are not described herein again.

An embodiment of this application further provides a terminal, including a processor and a communication interface, where
the communication interface is configured to receive first configuration information from a network device, where the first configuration information includes first information and/or second information;
the processor is configured to perform CLI measurement on a CLI measurement resource based on the first configuration information; and
the communication interface is configured to send, to the network device, a CLI report corresponding to the CLI measurement resource, where
the first information is used to configure or indicate spatial relation information corresponding to each CLI measurement resource, and the second information is used to configure or indicate a configuration parameter for CLI measurement.

The terminal embodiment corresponds to the foregoing terminal-side method embodiment, and each implementation process and implementation of the foregoing method embodiment can be applied to the terminal embodiment, with the same technical effect achieved. Specifically, FIG. 8 is a schematic diagram of a hardware structure of a terminal for implementing an embodiment of this application.

The terminal 800 includes but is not limited to at least some components such as a radio frequency unit 801, a network module 802, an audio output unit 803, an input unit 804, a sensor 805, a display unit 806, a user input unit 807, an interface unit 808, a memory 809, and a processor 810.

A person skilled in the art may understand that the terminal 800 may further include a power supply (for example, a battery) supplying power to all components. Optionally, the power supply may be logically connected to the processor 810 through a power management system. In this way, functions such as charge management, discharge management, and power consumption management are implemented by using the power management system. The terminal structure shown in FIG. 8 does not constitute a limitation on the terminal. The terminal may include more or fewer components than those shown in the figure, or some components are combined, or component arrangements are different. Details are not described herein again.

It should be understood that, in this embodiment of this application, the input unit 804 may include a graphics processing unit (Graphics Processing Unit, GPU) 8041 and a microphone 8042. The graphics processing unit 8041 processes image data of a still picture or video obtained by an image capture apparatus (such as a camera) in a video capture mode or an image capture mode. The display unit 806 may include a display panel 8061, and the display panel 8061 may be configured in a form of a liquid crystal display, an organic light-emitting diode, or the like. The user input unit 807 includes at least one of a touch panel 8071 and other input devices 8072. The touch panel 8071 is also referred to as a touchscreen. The touch panel 8071 may include two parts: a touch detection apparatus and a touch controller. The other input devices 8072 may include but are not limited to a physical keyboard, a function button (such as a volume control button or a power button), a trackball, a mouse, and a joystick. Details are not described herein again.

In this embodiment of this application, after receiving downlink data from a network device, the radio frequency unit 801 may transmit the downlink data to the processor 810 for processing. In addition, the radio frequency unit 801 may send uplink data to the network device. Usually, the radio frequency unit 801 includes but is not limited to an antenna, an amplifier, a transceiver, a coupler, a low noise amplifier, a duplexer, and the like.

The memory 809 may be configured to store software programs or instructions and various data. The memory 809 may primarily include a first storage area for storing programs or instructions and a second storage area for storing data. The first storage area may store an operating system, an application program or instructions required by at least one function (such as an audio play function and an image play function), and the like. In addition, the memory 809 may include a volatile memory or a non-volatile memory, or the memory 809 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 809 in this embodiment of this application includes but is not limited to these and any other suitable types of memories.

The processor 810 may include one or more processing units. Optionally, the processor 810 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 810.

The radio frequency unit 801 is configured to receive first configuration information from a network device, where the first configuration information includes first information and/or second information.

The processor 810 is configured to perform CLI measurement on a CLI measurement resource based on the first configuration information.

The radio frequency unit 801 is configured to send, to the network device, a CLI report corresponding to the CLI measurement resource, where
the first information is used to configure or indicate spatial relation information corresponding to each CLI measurement resource, and the second information is used to configure or indicate a configuration parameter for CLI measurement.

Optionally, the processor 810 is configured to: in a case that measurement and reporting are performed on a first CLI measurement resource for which no spatial relation information is configured or indicated, determine spatial relation information for the first CLI measurement resource according to at least one of the following rules:
QCL-D of the first CLI measurement resource is the same as QCL-D of a last received physical downlink shared channel PDSCH;
QCL-D of the first CLI measurement resource is the same as QCL-D of a last monitored control resource set CORESET;
QCL-D of the first CLI measurement resource is the same as QCL-D of either a received PDSCH or a monitored CORESET, whichever is more recent;
QCL-D of the first CLI measurement resource is the same as QCL-D of a CORESET with a smallest index in an active bandwidth part BWP; and
a QCL source of the first CLI measurement resource is determined in a predefined manner.

Optionally, the radio frequency unit 801 is configured to receive, from the network device, third information for triggering aperiodic CLI measurement and reporting, where the third information includes any one of the following:
UL grant information;
DL grant information; and
group common DCI.

Optionally, the CLI report includes only first indication information, where the first indication information is used to indicate a CLI measurement value corresponding to the CLI measurement resource;
or
the CLI report includes first indication information and second indication information, where the first indication information is used to indicate a CLI measurement value corresponding to the CLI measurement resource, and the second indication information is used to indicate whether the CLI measurement value meets a first condition or the second indication information is used to indicate whether the CLI report includes the first indication information, where
the first condition includes one or more of the following:
   the CLI measurement value is greater than a first threshold;
   a variation of the CLI measurement value is greater than a second threshold; and
   a value of a BFI is greater than a third threshold, where the third threshold is less than a trigger threshold for beam failure recovery BFR.

Optionally, the radio frequency unit 801 is configured to perform one or more of the following:
in a case that the CLI report and a CSI report are transmitted on a same channel and that the CLI report includes only the first indication information, jointly encoding and mapping the first indication information with part 1 (CSI part 1) of the CSI report, or jointly encoding and mapping the first indication information with part 2 (CSI part 2) of the CSI report; and
in a case that the CLI report and the CSI report are transmitted on the same channel and that the CLI report includes the first indication information and the second indication information, jointly encoding and mapping the first indication information with CSI part 2, and jointly encoding and mapping the second indication information with CSI part 1.

Optionally, the radio frequency unit 801 is configured to perform one or more of the following:
in a case that the CLI report and first uplink information are transmitted on a same channel and that the CLI report includes only the first indication information, jointly encoding and mapping the CLI report with the first uplink information; and
in a case that the CLI report and the first uplink information are transmitted on the same channel and that the CLI report includes the first indication information and the second indication information, separately encoding and mapping the first indication information, and jointly encoding and mapping the second indication information with the first uplink information, where
the first uplink information includes a HARQ-ACK and/or an SR.

Optionally, the radio frequency unit 801 is configured to perform one or more of the following:
in a case that the CLI report, a CSI report, and first uplink information are transmitted on a same channel, discarding the CLI report or the CSI report;
in a case that the CLI report, the CSI report, and the first uplink information are transmitted on the same channel and that the CLI report includes only the first indication information, jointly encoding and mapping the CLI report, CSI part 1, and the first uplink information, or jointly encoding the CLI report with CSI part 2; and
in a case that the CLI report, the CSI report, and the first uplink information are transmitted on the same channel and that the CLI report includes the first indication information and the second indication information, jointly encoding and mapping the first indication information with CSI part 2, and jointly encoding and mapping the second indication information with CSI part 1 and the first uplink information, where
the first uplink information includes a HARQ-ACK and/or an SR.

Optionally, the processor 810 is configured to determine a priority of the CLI report according to at least one of the following rules:
a priority of a periodic CLI report is lower than a priority of an aperiodic CLI report;
a priority of a CLI report is higher than a priority of an aperiodic CSI report;
a priority of an aperiodic CLI report is lower than a priority of an aperiodic CSI report;
a priority of a periodic CLI report is lower than a priority of a periodic CSI report; and
a priority of a periodic CSI report is lower than a priority of an aperiodic CLI report.

Optionally, the radio frequency unit 801 is configured to receive first trigger information and second trigger information from the network device, where the first trigger information is used to trigger an aperiodic CLI report and the second trigger information is used to trigger an aperiodic CSI report; and
the processor 810 is configured to perform at least one of the following:
being triggered to send the aperiodic CLI report and the aperiodic CSI report in different time units based on the first trigger information and the second trigger information;
being triggered to send the aperiodic CLI report and the aperiodic CSI report in different time units based on the first trigger information and the second trigger information, where the first trigger information and the second trigger information are transmitted using different DCIs;
being triggered to send the aperiodic CLI report and the aperiodic CSI report in a same time unit based on the first trigger information and the second trigger information; and
being triggered to send the aperiodic CLI report and the aperiodic CSI report in the same time unit based on the first trigger information and the second trigger information, where the first trigger information and the second trigger information are transmitted in the same DCI.

Optionally, in a case of being triggered to send the aperiodic CLI report and the aperiodic CSI report in the same time unit, the radio frequency unit 801 is configured to perform any one of the following:
sending the aperiodic CLI report or the aperiodic CSI report;
sending the aperiodic CLI report and the aperiodic CSI report;
in a case that the aperiodic CLI report and the aperiodic CSI report are transmitted on a same channel, sending the aperiodic CLI report or the aperiodic CSI report;
in a case that the aperiodic CLI report and the aperiodic CSI report are transmitted on different channels, sending the aperiodic CLI report and the aperiodic CSI report;
in a case that the aperiodic CLI report and the aperiodic CSI report are transmitted on the same channel, sending the aperiodic CLI report and the aperiodic CSI report; and
in a case that the aperiodic CLI report and the aperiodic CSI report are transmitted on different channels, sending the aperiodic CLI report or the aperiodic CSI report.

Optionally, the processor 810 is configured to perform any one of the following rules in a case that the CLI report and a CSI report are transmitted on a same channel and that transmission resources do not meet simultaneous transmission of all report content of the CLI report and the CSI report:
discarding in an order of the CLI report, CSI part 2 in the CSI report, and CSI part 1 in the CSI report, and in a case that a plurality of CLI reports exist, discarding one or more CLI reports in a preset order;
discarding in an order of CSI part 2 in the CSI report, the CLI report, and CSI part 1 in the CSI report, and in a case that a plurality of CLI reports exist, discarding one or more CLI reports in a preset order; and
discarding in an order of CSI part 2 in the CSI report, CSI part 1 in the CSI report, and the CLI report, and in a case that a plurality of CLI reports exist, discarding one or more CLI reports in a preset order.

Optionally, in a case that DRX is configured and/or that DCI with a CRC scrambled by a PS-RNTI is detected, the radio frequency unit 801 is configured to:
send the CLI report to the network device within a DRX active time; and
determine, based on a configuration of the network device, whether to send the CLI report to the network device within a DRX inactive time.

An embodiment of this application further provides a network device, including a processor and a communication interface, where
the communication interface is configured to send first configuration information to a terminal, where the first configuration information includes first information and/or second information; and
the communication interface is configured to receive a CLI report on each of one or more CLI measurement resources, sent by the terminal, where
the first information is used to configure or indicate spatial relation information corresponding to each CLI measurement resource, and the second information is used to configure or indicate a configuration parameter for CLI measurement.

The network device embodiment corresponds to the foregoing method embodiment of the network device, and each implementation process and implementation of the foregoing method embodiment can be applied to the network device embodiment, with the same technical effect achieved.

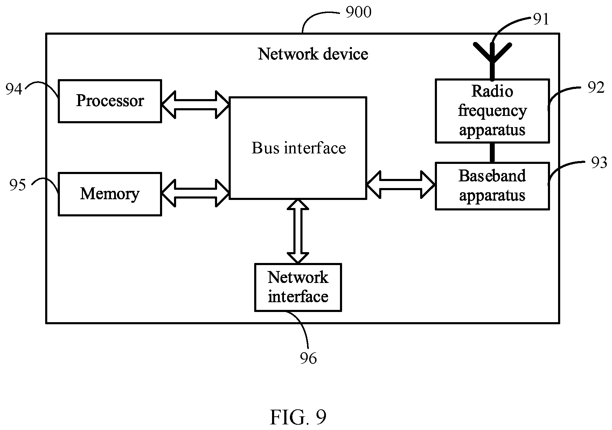

Specifically, an embodiment of this application further provides a network device. As shown in FIG. 9, the network device 900 includes an antenna 91, a radio frequency apparatus 92, a baseband apparatus 93, a processor 94, and a memory 95. The antenna 91 is connected to the radio frequency apparatus 92. In an uplink direction, the radio frequency apparatus 92 receives information by using the antenna 91, and sends the received information to the baseband apparatus 93 for processing. In a downlink direction, the baseband apparatus 93 processes to-be-sent information, and sends the information to the radio frequency apparatus 92; and the radio frequency apparatus 92 processes the received information and then sends the information out by using the antenna 91.

The method performed by the network device in the foregoing embodiment may be implemented in the baseband apparatus 93. The baseband apparatus 93 includes a baseband processor.

The baseband apparatus 93 may include, for example, at least one baseband unit, where a plurality of chips are disposed on the baseband unit. As shown in FIG. 9, one of the chips is, for example, the baseband processor, connected to the memory 95 by using a bus interface, to invoke a program in the memory 95 to perform the operation of the network device shown in the foregoing method embodiment.

The network device may further include a network interface 96, where the interface is, for example, a common public radio interface (common public radio interface, CPRI).

Specifically, the network device 900 in this embodiment of this application further includes a program or instructions stored in the memory 95 and capable of running on the processor 94. When the processor 94 invokes the program or instructions in the memory 95, the method performed by each module shown in FIG. 6 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the method for measuring and reporting cross-link interference is implemented, with the same technical effect achieved. To avoid repetition, details are not described herein again.

The processor is a processor in the terminal in the foregoing embodiment. The readable storage medium includes a computer-readable storage medium, for example, a computer read-only memory (Read-Only Memory, ROM), a random access memory (Random Access Memory, RAM), a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the method for measuring and reporting cross-link interference, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the method for measuring and reporting cross-link interference, with the same technical effect achieved. To avoid repetition, details are not described herein again.

An embodiment of this application further provides a system for measuring and reporting cross-link interference. The system includes a terminal and a network device. The terminal may be configured to perform the steps of the method for measuring and reporting cross-link interference on a terminal side. The network device may be configured to perform the steps of the method for measuring and reporting cross-link interference on a network device side.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

## Claims

1. A method for measuring and reporting cross-link interference, comprising:
receiving, by a terminal, first configuration information from a network device, wherein the first configuration information comprises first information and/or second information;
performing, by the terminal, cross-link interference CLI measurement on a CLI measurement resource based on the first configuration information; and
sending, by the terminal to the network device, a CLI report corresponding to the CLI measurement resource, wherein
the first information is used to configure or indicate spatial relation information corresponding to each CLI measurement resource, and the second information is used to configure or indicate a configuration parameter for CLI measurement.

2. The method according to claim 1, wherein the method further comprises:
in a case that the terminal performs measurement and reporting on a first CLI measurement resource for which no spatial relation information is configured or indicated, determining, by the terminal, spatial relation information for the first CLI measurement resource according to at least one of the following rules:
quasi co-location type D QCL-D of the first CLI measurement resource is the same as QCL-D of a last received physical downlink shared channel PDSCH;
QCL-D of the first CLI measurement resource is the same as QCL-D of a last monitored control resource set CORESET;
QCL-D of the first CLI measurement resource is the same as QCL-D of either a received PDSCH or a monitored CORESET, whichever is more recent;
QCL-D of the first CLI measurement resource is the same as QCL-D of a CORESET with a smallest index in an active bandwidth part BWP; and
a QCL source of the first CLI measurement resource is determined in a predefined manner.

3. The method according to claim 1, wherein the method further comprises:
receiving, by the terminal from the network device, third information for triggering aperiodic CLI measurement and reporting, wherein the third information comprises any one of the following:
uplink grant UL grant information;
downlink grant DL grant information; and
group common downlink control information group common DCI.

4. The method according to claim 1, wherein
the CLI report comprises only first indication information, wherein the first indication information is used to indicate a CLI measurement value corresponding to the CLI measurement resource;
or
the CLI report comprises first indication information and second indication information, wherein the first indication information is used to indicate a CLI measurement value corresponding to the CLI measurement resource, and the second indication information is used to indicate whether the CLI measurement value meets a first condition or the second indication information is used to indicate whether the CLI report comprises the first indication information, wherein
the first condition comprises one or more of the following:
the CLI measurement value is greater than a first threshold;
a variation of the CLI measurement value is greater than a second threshold; and
a value of a beam failure instance BFI is greater than a third threshold, wherein the third threshold is less than a trigger threshold for beam failure recovery BFR.

5. The method according to claim 4, wherein the sending, to the network device, a CLI report corresponding to the CLI measurement resource comprises one or more of the following:
in a case that the CLI report and a CSI report are transmitted on a same channel and that the CLI report comprises only the first indication information, jointly encoding and mapping the first indication information with part 1 (CSI part 1) of the CSI report, or jointly encoding and mapping the first indication information with part 2 (CSI part 2) of the CSI report; and
in a case that the CLI report and the CSI report are transmitted on the same channel and that the CLI report comprises the first indication information and the second indication information, jointly encoding and mapping the first indication information with CSI part 2, and jointly encoding and mapping the second indication information with CSI part 1.

6. The method according to claim 4, wherein the sending, to the network device, a CLI report corresponding to the CLI measurement resource comprises one or more of the following:
in a case that the CLI report and first uplink information are transmitted on a same channel and that the CLI report comprises only the first indication information, jointly encoding and mapping the CLI report with the first uplink information; and
in a case that the CLI report and the first uplink information are transmitted on the same channel and that the CLI report comprises the first indication information and the second indication information, separately encoding and mapping the first indication information, and jointly encoding and mapping the second indication information with the first uplink information, wherein
the first uplink information comprises a hybrid automatic repeat request acknowledgement HARQ-ACK and/or a scheduling request SR.

7. The method according to claim 4, wherein the sending, to the network device, a CLI report corresponding to the CLI measurement resource comprises one or more of the following:
in a case that the CLI report, a CSI report, and first uplink information are transmitted on a same channel, discarding the CLI report or the CSI report;
in a case that the CLI report, the CSI report, and the first uplink information are transmitted on the same channel and that the CLI report comprises only the first indication information, jointly encoding and mapping the CLI report, CSI part 1, and the first uplink information, or jointly encoding the CLI report with CSI part 2; and
in a case that the CLI report, the CSI report, and the first uplink information are transmitted on the same channel and that the CLI report comprises the first indication information and the second indication information, jointly encoding and mapping the first indication information with CSI part 2, and jointly encoding and mapping the second indication information with CSI part 1 and the first uplink information, wherein
the first uplink information comprises a HARQ-ACK and/or an SR.

8. The method according to claim 1, wherein the method further comprises:
determining, by the terminal, a priority of the CLI report according to at least one of the following rules:
a priority of a periodic CLI report is lower than a priority of an aperiodic CLI report;
a priority of a CLI report is higher than a priority of an aperiodic CSI report;
a priority of an aperiodic CLI report is lower than a priority of an aperiodic CSI report;
a priority of a periodic CLI report is lower than a priority of a periodic CSI report; and
a priority of a periodic CSI report is lower than a priority of an aperiodic CLI report.

9. The method according to claim 1, wherein
the method further comprises:
receiving, by the terminal, first trigger information and second trigger information from the network device, wherein the first trigger information is used to trigger an aperiodic CLI report and the second trigger information is used to trigger an aperiodic CSI report; and
performing, by the terminal, at least one of the following:
the terminal being triggered to send the aperiodic CLI report and the aperiodic CSI report in different time units based on the first trigger information and the second trigger information;
the terminal being triggered to send the aperiodic CLI report and the aperiodic CSI report in different time units based on the first trigger information and the second trigger information, wherein the first trigger information and the second trigger information are transmitted using different DCIs;
the terminal being triggered to send the aperiodic CLI report and the aperiodic CSI report in a same time unit based on the first trigger information and the second trigger information; and
the terminal being triggered to send the aperiodic CLI report and the aperiodic CSI report in the same time unit based on the first trigger information and the second trigger information, wherein the first trigger information and the second trigger information are transmitted in the same DCI.

10. The method according to claim 9, wherein in a case that the terminal is triggered to send the aperiodic CLI report and the aperiodic CSI report in the same time unit, the method further comprises any one of the following:
sending, by the terminal, the aperiodic CLI report or the aperiodic CSI report;
sending, by the terminal, the aperiodic CLI report and the aperiodic CSI report;
in a case that the aperiodic CLI report and the aperiodic CSI report are transmitted on a same channel, sending, by the terminal, the aperiodic CLI report or the aperiodic CSI report;
in a case that the aperiodic CLI report and the aperiodic CSI report are transmitted on different channels, sending, by the terminal, the aperiodic CLI report and the aperiodic CSI report;
in a case that the aperiodic CLI report and the aperiodic CSI report are transmitted on the same channel, sending, by the terminal, the aperiodic CLI report and the aperiodic CSI report; and
in a case that the aperiodic CLI report and the aperiodic CSI report are transmitted on different channels, sending, by the terminal, the aperiodic CLI report or the aperiodic CSI report.

11. The method according to claim 1, wherein the method further comprises:
in a case that the CLI report and a CSI report are transmitted on a same channel and that transmission resources do not meet simultaneous transmission of all report content of the CLI report and the CSI report, performing, by the terminal, any one of the following rules:
discarding in an order of the CLI report, CSI part 2 in the CSI report, and CSI part 1 in the CSI report, and in a case that a plurality of CLI reports exist, discarding one or more CLI reports in a preset order;
discarding in an order of CSI part 2 in the CSI report, the CLI report, and CSI part 1 in the CSI report, and in a case that a plurality of CLI reports exist, discarding one or more CLI reports in a preset order; and
discarding in an order of CSI part 2 in the CSI report, CSI part 1 in the CSI report, and the CLI report, and in a case that a plurality of CLI reports exist, discarding one or more CLI reports in a preset order.

12. The method according to claim 1, wherein the method further comprises:
in a case that the terminal is configured with discontinuous reception DRX and/or detects DCI with a cyclic redundancy check CRC scrambled by a power saving radio network temporary identifier PS-RNTI, sending the CLI report to the network device:
sending the CLI report to the network device within a DRX active time; and
determining, based on a configuration of the network device, whether to send the CLI report to the network device within a DRX inactive time.

13. A method for measuring and reporting cross-link interference, comprising:
sending, by a network device, first configuration information to a terminal, wherein the first configuration information comprises first information and/or second information; and
receiving, by the network device, a CLI report on each of one or more CLI measurement resources, sent by the terminal, wherein
the first information is used to configure or indicate spatial relation information corresponding to each CLI measurement resource, and the second information is used to configure or indicate a configuration parameter for CLI measurement.

14. The method according to claim 13, wherein the method further comprises:
sending, by the network device to the terminal, third information for triggering aperiodic CLI measurement and reporting, wherein the third information comprises any one of the following:
UL grant information;
DL grant information; and
group common DCI.

15. The method according to claim 13, wherein
the CLI report comprises only first indication information, wherein the first indication information is used to indicate a CLI measurement value corresponding to the CLI measurement resource;
or
the CLI report comprises first indication information and second indication information, wherein the first indication information is used to indicate a CLI measurement value corresponding to the CLI measurement resource, and the second indication information is used to indicate whether the CLI measurement value meets a first condition, wherein
the first condition comprises one or more of the following:
the CLI measurement value is greater than a first threshold;
a variation of the CLI measurement value is greater than a second threshold; and
a value of a BFI is greater than a third threshold, wherein the third threshold is less than a trigger threshold for BFR.

16. An apparatus for measuring and reporting cross-link interference, comprising:
a first receiving module, configured to receive first configuration information from a network device, wherein the first configuration information comprises first information and/or second information;
a measurement module, configured to perform CLI measurement on a CLI measurement resource based on the first configuration information; and
a first sending module, configured to send, to the network device, a CLI report corresponding to the CLI measurement resource, wherein
the first information is used to configure or indicate spatial relation information corresponding to each CLI measurement resource, and the second information is used to configure or indicate a configuration parameter for CLI measurement.

17. The apparatus according to claim 16, wherein the apparatus further comprises:
a determining module, configured to: in a case that measurement and reporting are performed on a first CLI measurement resource for which no spatial relation information is configured or indicated, determine spatial relation information for the first CLI measurement resource according to at least one of the following rules:
QCL-D of the first CLI measurement resource is the same as QCL-D of a last received physical downlink shared channel PDSCH;
QCL-D of the first CLI measurement resource is the same as QCL-D of a last monitored control resource set CORESET;
QCL-D of the first CLI measurement resource is the same as QCL-D of either a received PDSCH or a monitored CORESET, whichever is more recent;
QCL-D of the first CLI measurement resource is the same as QCL-D of a CORESET with a smallest index in an active bandwidth part BWP; and
a QCL source of the first CLI measurement resource is determined in a predefined manner.

18. The apparatus according to claim 16, wherein the apparatus further comprises:
a second receiving module, configured to receive, from the network device, third information for triggering aperiodic CLI measurement and reporting, wherein the third information comprises any one of the following:
UL grant information;
DL grant information; and
group common DCI.

19. The apparatus according to claim 16, wherein
the CLI report comprises only first indication information, wherein the first indication information is used to indicate a CLI measurement value corresponding to the CLI measurement resource;
or
the CLI report comprises first indication information and second indication information, wherein the first indication information is used to indicate a CLI measurement value corresponding to the CLI measurement resource, and the second indication information is used to indicate whether the CLI measurement value meets a first condition or the second indication information is used to indicate whether the CLI report comprises the first indication information, wherein
the first condition comprises one or more of the following:
the CLI measurement value is greater than a first threshold;
a variation of the CLI measurement value is greater than a second threshold; and
a value of a BFI is greater than a third threshold, wherein the third threshold is less than a trigger threshold for beam failure recovery BFR.

20. The apparatus according to claim 19, wherein the first sending module is configured to perform one or more of the following:
in a case that the CLI report and a CSI report are transmitted on a same channel and that the CLI report comprises only the first indication information, jointly encoding and mapping the first indication information with part 1 (CSI part 1) of the CSI report, or jointly encoding and mapping the first indication information with part 2 (CSI part 2) of the CSI report; and
in a case that the CLI report and the CSI report are transmitted on the same channel and that the CLI report comprises the first indication information and the second indication information, jointly encoding and mapping the first indication information with CSI part 2, and jointly encoding and mapping the second indication information with CSI part 1.

21. The apparatus according to claim 19, wherein the first sending module is configured to perform one or more of the following:
in a case that the CLI report and first uplink information are transmitted on a same channel and that the CLI report comprises only the first indication information, jointly encoding and mapping the CLI report with the first uplink information; and
in a case that the CLI report and the first uplink information are transmitted on the same channel and that the CLI report comprises the first indication information and the second indication information, separately encoding and mapping the first indication information, and jointly encoding and mapping the second indication information with the first uplink information, wherein
the first uplink information comprises a HARQ-ACK and/or an SR.

22. The apparatus according to claim 19, wherein the first sending module is configured to perform one or more of the following:
in a case that the CLI report, a CSI report, and first uplink information are transmitted on a same channel, discarding the CLI report or the CSI report;
in a case that the CLI report, the CSI report, and the first uplink information are transmitted on the same channel and that the CLI report comprises only the first indication information, jointly encoding and mapping the CLI report, CSI part 1, and the first uplink information, or jointly encoding the CLI report with CSI part 2; and
in a case that the CLI report, the CSI report, and the first uplink information are transmitted on the same channel and that the CLI report comprises the first indication information and the second indication information, jointly encoding and mapping the first indication information with CSI part 2, and jointly encoding and mapping the second indication information with CSI part 1 and the first uplink information, wherein
the first uplink information comprises a HARQ-ACK and/or an SR.

23. The apparatus according to claim 16, wherein the apparatus further comprises:
a second determining module, configured to determine a priority of the CLI report according to at least one of the following rules:
a priority of a periodic CLI report is lower than a priority of an aperiodic CLI report;
a priority of a CLI report is higher than a priority of an aperiodic CSI report;
a priority of an aperiodic CLI report is lower than a priority of an aperiodic CSI report;
a priority of a periodic CLI report is lower than a priority of a periodic CSI report; and
a priority of a periodic CSI report is lower than a priority of an aperiodic CLI report.

24. The apparatus according to claim 16, wherein
the apparatus further comprises:
a third receiving module, configured to receive first trigger information and second trigger information from the network device, wherein the first trigger information is used to trigger an aperiodic CLI report and the second trigger information is used to trigger an aperiodic CSI report; and
a first execution module, configured to perform at least one of the following:
being triggered to send the aperiodic CLI report and the aperiodic CSI report in different time units based on the first trigger information and the second trigger information;
being triggered to send the aperiodic CLI report and the aperiodic CSI report in different time units based on the first trigger information and the second trigger information, wherein the first trigger information and the second trigger information are transmitted using different DCIs;
being triggered to send the aperiodic CLI report and the aperiodic CSI report in a same time unit based on the first trigger information and the second trigger information; and
being triggered to send the aperiodic CLI report and the aperiodic CSI report in the same time unit based on the first trigger information and the second trigger information, wherein the first trigger information and the second trigger information are transmitted in the same DCI.

25. The apparatus according to claim 24, wherein in a case of being triggered to send the aperiodic CLI report and the aperiodic CSI report in the same time unit, the apparatus further comprises:
a second sending module, configured to perform any one of the following:
sending the aperiodic CLI report or the aperiodic CSI report;
sending the aperiodic CLI report and the aperiodic CSI report;
in a case that the aperiodic CLI report and the aperiodic CSI report are transmitted on a same channel, sending the aperiodic CLI report or the aperiodic CSI report;
in a case that the aperiodic CLI report and the aperiodic CSI report are transmitted on different channels, sending the aperiodic CLI report and the aperiodic CSI report;
in a case that the aperiodic CLI report and the aperiodic CSI report are transmitted on the same channel, sending the aperiodic CLI report and the aperiodic CSI report; and
in a case that the aperiodic CLI report and the aperiodic CSI report are transmitted on different channels, sending the aperiodic CLI report or the aperiodic CSI report.

26. The apparatus according to claim 16, wherein the apparatus further comprises:
a second execution module, configured to perform any one of the following rules in a case that the CLI report and a CSI report are transmitted on a same channel and that transmission resources do not meet simultaneous transmission of all report content of the CLI report and the CSI report:
discarding in an order of the CLI report, CSI part 2 in the CSI report, and CSI part 1 in the CSI report, and in a case that a plurality of CLI reports exist, discarding one or more CLI reports in a preset order;
discarding in an order of CSI part 2 in the CSI report, the CLI report, and CSI part 1 in the CSI report, and in a case that a plurality of CLI reports exist, discarding one or more CLI reports in a preset order; and
discarding in an order of CSI part 2 in the CSI report, CSI part 1 in the CSI report, and the CLI report, and in a case that a plurality of CLI reports exist, discarding one or more CLI reports in a preset order.

27. The apparatus according to claim 16, wherein:
in a case that DRX is configured and/or that DCI with a CRC scrambled by a PS-RNTI is detected, the first sending module is configured to:
send the CLI report to the network device within a DRX active time; and
determine, based on a configuration of the network device, whether to send the CLI report to the network device within a DRX inactive time.

28. An apparatus for measuring and reporting cross-link interference, comprising:
a third sending module, configured to send first configuration information to a terminal, wherein the first configuration information comprises first information and/or second information; and
a fourth receiving module, configured to receive a CLI report on each of one or more CLI measurement resources, sent by the terminal, wherein
the first information is used to configure or indicate spatial relation information corresponding to each CLI measurement resource, and the second information is used to configure or indicate a configuration parameter for CLI measurement.

29. The apparatus according to claim 28, wherein the apparatus further comprises:
a fourth sending module, configured to send, to the terminal, third information for triggering aperiodic CLI measurement and reporting, wherein the third information comprises any one of the following:
UL grant information;
DL grant information; and
group common DCI.

30. The apparatus according to claim 28, wherein
the CLI report comprises only first indication information, wherein the first indication information is used to indicate a CLI measurement value corresponding to the CLI measurement resource;
or
the CLI report comprises first indication information and second indication information, wherein the first indication information is used to indicate a CLI measurement value corresponding to the CLI measurement resource, and the second indication information is used to indicate whether the CLI measurement value meets a first condition, wherein
the first condition comprises one or more of the following:
the CLI measurement value is greater than a first threshold;
a variation of the CLI measurement value is greater than a second threshold; and
a value of a BFI is greater than a third threshold, wherein the third threshold is less than a trigger threshold for BFR.

31. A terminal, comprising a processor and a memory, wherein the memory stores a program or instructions capable of running on the processor, and when the program or instructions are executed by the processor, the steps of the method for measuring and reporting cross-link interference according to any one of claims 1 to 12 are implemented.

32. A network device, comprising a processor and a memory, wherein the memory stores a program or instructions capable of running on the processor, and when the program or instructions are executed by the processor, the steps of the method for measuring and reporting cross-link interference according to any one of claims 13 to 15 are implemented.

33. A readable storage medium, wherein the readable storage medium stores a program or instructions, and when the program or instructions are executed by a processor, the steps of the method for measuring and reporting cross-link interference according to any one of claims 1 to 12 are implemented, or the steps of the method for measuring and reporting cross-link interference according to any one of claims 13 to 15 are implemented.
